# EUROPEAN PATENT SPECIFICATION

(11) **EP 3 247 969 B1**
(45) Date of publication and mention of the grant of the patent: **26.08.2020**
(21) Application number: 15878323.3
(22) Date of filing: 23.12.2015
(51) Int. Cl.: F41A 99/00, F41G 9/00, F41G 3/06, F41G 3/04, F41G 3/16, H04W 84/12, G01D 21/02, F41A 35/00, F41G 1/473

(54) **A SENSOR PACK FOR FIREARM**
SENSORPACK FÜR FEUERWAFFE
ENSEMBLE DE CAPTEURS POUR ARME À FEU

(30) Priority: 22.01.2015 US 201562106394 P; 24.02.2015 US 201562120302 P
(43) Date of publication of application: 29.11.2017
(73) Proprietor: COLT CANADA IP HOLDING PARTNERSHIP, Kitchener ON NC2 1J3 (CA)
(72) Inventor: DOWNING, Warren, Ottawa, Ontario K1V 1Y3 (CA)
(74) Representative: Delorme, Nicolas
(86) International application number: PCT/CA2015/051369
(87) International publication number: WO 2016/115619

(56) References cited:
- WO-A1-2008/048116
- WO-A1-2011/162245
- WO-A1-2015/031993
- WO-A2-2005/080908
- WO-A2-2009/151713
- US-A1- 2010 196 859
- US-A1- 2012 097 741
- US-A1- 2013 203 019
- US-A1- 2014 047 754
- US-B1- 8 739 672

## Description

### CROSS REFERENCE TO RELATED APPLICATIONS

Reference is made to United States Provisional Application Serial No. 62/106,394, filed January 22, 2015, and United States Provisional Application Serial No. 62/120,302, filed February 24, 2015.

### BACKGROUND

Embodiments of the invention relate generally to systems of providing information between one or more different battlefield participants.

Communication of information between different battlefield participants (e.g., soldiers) may improve battle results. Further, the more information communicated, the more the improvement.

During battle several different components may be used. These include, for example, rifles, scopes, grenade launchers and communication devices. Some of these components may provide for different views and angles of attack in a battlefield situation.

US 2010/0196859 A1 discloses a combat information system and US 2013/0203019 A1 discloses rifle with a holding device for a mobile computing device.

### SUMMARY OF THE INVENTION

The invention is defined in the appended claims. In one aspect, a weapon is disclosed that provides information regarding its position and orientation to a central location that can interpret and display this information.

In one embodiment, a networked battle system is disclosed. The system inter alia includes a communication network, a first rifle, an accessory holding device coupled to the first rifle, and a sensor pack attached to the accessory holding device that includes a sensor for determining a bearing of the first rifle, a sensor for an accelerometer and a rate gyroscope. The system also includes a communication element coupled to the rifle allowing the sensor pack to provide sensor information to the communication network and a battle management system in communication with the first rifle through the communication network that receives the sensor information from the sensor pack updates a battle plan based on the sensor information to form an updated battle plan.

In another aspect, a rifle is disclosed. The rifle includes a barrel, at least one accessory carrier coupled to a portion of the rifle and a sensor pack coupled to the at least accessory carrier and that includes a sensor for determining a bearing of the first rifle, a sensor for an accelerometer and a rate gyroscope.

In another aspect, a battlefield system that includes a bearing sensor that determines a bearing of a battlefield device is disclosed. The system also includes a microprocessor in communication with the bearing sensor and carried either on or in the battlefield device and a communication element carried by the battlefield device. In this system information is provided from the sensor to the microprocessor and then provided to the communication element for transmission to a communication network.

Other aspects and features of embodiments of the invention will become apparent to those ordinarily skilled in the art upon review of the following description of specific embodiments of the invention in conjunction with the accompanying figures.

### BRIEF DESCRIPTION OF THE DRAWINGS

Examples not being in accordance with the present invention and embodiments of the present invention will now be described, by way of example only, with reference to the attached Figures, wherein:
FIG. 1 is a perspective view of firearm embodied as a rifle according to one example;
FIG. 2 shows an example of a rail configuration according to one example;
FIG. 3 is high-level system diagram illustrating a network formed between a firearm and another device;
FIG. 4 is an example of display screen of an accessory that may be coupled to a firearm;
FIG. 5 is a diagram illustrating different possible communication paths in a firearm;
FIG. 6 is a dataflow diagram illustrating data transfer from rifle accessories to a central location and back;
FIG. 7 illustrates an alternative example of a scope;
FIG. 8 illustrates multiple battlefield devices networked together;
FIG. 9 shows an embodiment of a rifle without rails coupled to an accessory carrier; and
FIG. 10 shows a side view of the accessory carrier of FIG. 9 having a sensor pack attached to it.

### DETAILED DESCRIPTION

The term "firearm" as used herein, refers at least to a rifle, machine gun, weapon, and pistol and may be automatic, semi-automatic or otherwise. Another example of a firearm includes a grenade launcher, mortar launcher or the like. A power or non-powered rail on a firearm may have certain accessories attached to it. The accessories include, for example, telescopic sights, tactical sights, laser sighting modules, Global Positioning Systems (GPS), bearing sensors, inclination sensors, laser distance measuring devices, accelerometers, microphones, video cameras, cameras and night vision scopes. This list is not meant to be exclusive, merely an example of accessories that may utilize a rail. Any of the devices (e.g., rifles, firearms, spotter scopes, etc.) disclosed herein may be referred to from time to time as a battlefield device.

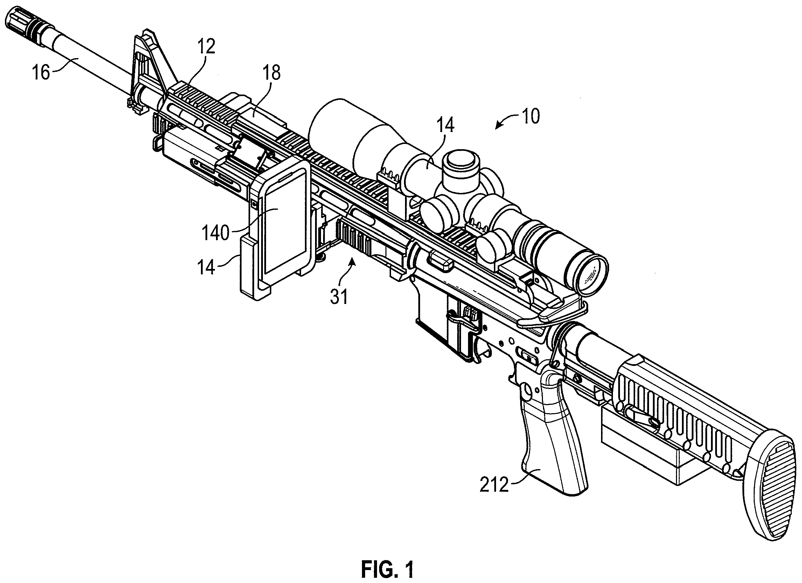

Referring now to FIG. 1, a perspective view of a rifle, weapon, firearm, (automatic, semi-automatic or otherwise) 10 is illustrated. Rifle, weapon, firearm, etc. 10 has a plurality of rails 12. In one embodiment, rails 12 may be anyone of a MIL-STD-1913 rail, Weaver rail, NATO STANAG 4694 accessory rail or equivalents thereof. Rails 12 are configured to allow a plurality of accessories 14 to the rifle 10. Rails 12 are mounted at the 12 o'clock, 3 o'clock, 6 o'clock and 9 o'clock positions with respect to a longitudinal or firing axis of the rifle and/or a barrel 16 of the rifle 10.

Accessories 14 may be any one of telescopic sights, tactical sights, laser sighting modules, Global Positioning Systems (GPS) and night vision scopes or any type of sensor. The aforementioned accessories are merely an example of contemplated accessories for use with rifle or firearm 10. A specific example of an attached accessory is shown as personal data assistant (PDA) 140 or cellular telephone in FIG. 1. This PDA 140 may have a screen to display information (e.g., maps, target locations, video or other visual information) and receive information from a user (e.g., a touch screen or other input devices). In accordance with an exemplary embodiment, accessories 14 are items that require a source of power and/or require data communication with another component of the rifle or firearm 10 or a system in which rifle or firearm 10 is employed. Of course, one or more of the accessories may have its own power supply and may be able to communicate data independent of the firearm.

A portion of a powering rail configured as a MIL-STD- 1913 rail is shown generally as 12. Rail 12 is a MIL-STD-1913 rail, such as a Weaver rail, NATO STANAG 4694 accessory rail or the like. Sliding over rail 12 is a powered or powering rail 18.

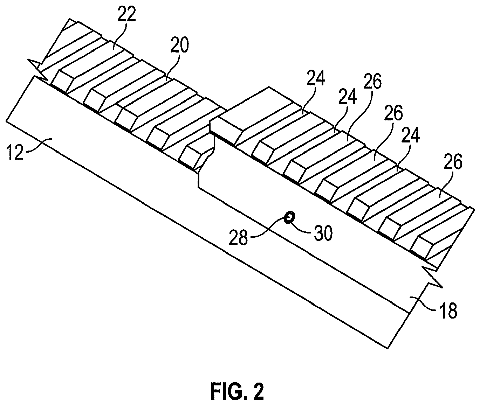

With reference to FIG. 2, rail 12 has a plurality of rail slots 20 and rail ribs 22, which are utilized in receiving an accessory of another rail such as powering rail 18. Powering rail 18 comprises a plurality of rail slots 24 and rail ribs 22 in a configuration that allows for the mating of accessories with powering rail 18.

In one embodiment, powering rail 18 is mounted to rail 12 via a cross pin 28 or other device received within a pin hole 30 of powering rail 18. The pin hole 30 accepts the cross pin 28 so that the pin 28 locks and secures the rails 12 and 18 together. Although FIG. 1 illustrates rail 18 secured to a top rail 12 of an upper receiver 31 of rifle or firearm 10 rail 18 can also be secured in additional locations such as the 3, 6 and 9 o'clock rail 12 locations. Still further, rail 18 may be secured to anyone or any combination of the 3, 6 and 9 o'clock rail 12 locations. In addition and in one alternative embodiment, powering rail 18 may be formed into anyone of rails 12 such that a separate rail 18 is not necessary. In other words and in this embodiment, the rail 12 is now the networked power and/or data transmitting rail.

As discussed further below, the rail 18 may also provide a path for transferring data from any or all of the accessories 14 to one or more processors carried in the firearm 10. Such processors may be located, for example, in the rail 18 or the pistol grip 212 or both. Also, the accessories themselves may have the ability to receive information back from the processors and transmit to a location remove from the firearm 10. For instance, information from sensors on the firearm 10 may be routed to the processors and then provided to the PDA 140 for transmission to an external location. This communication may be through a rail or direct in which case a rail may be omitted entirely.

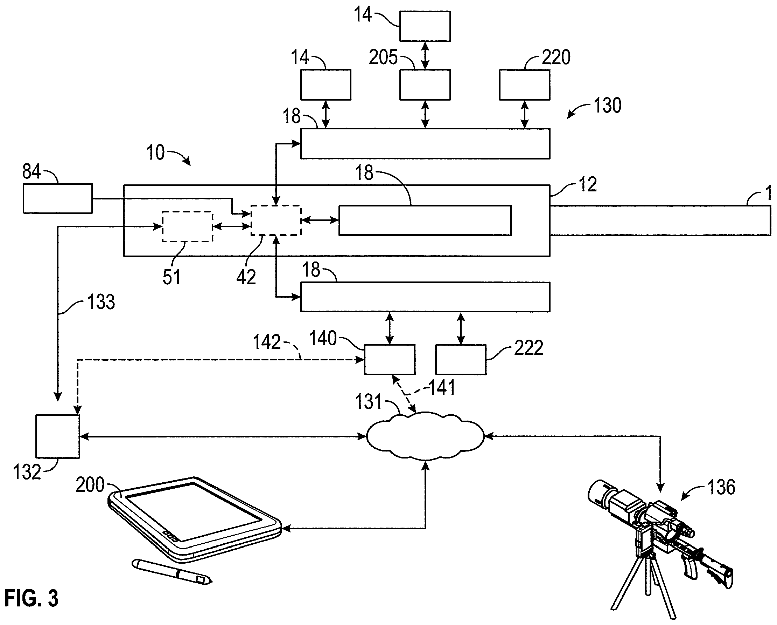

Referring now to FIG. 3, a schematic illustration of a system 130, using various embodiments of the present invention is illustrated. As illustrated, a firearm 10 includes a barrel 16 and has a plurality of powering rails 18 (e.g., 3 o'clock, 6 o'clock, 9 o'clock and 12 o'clock locations with respect to a longitudinal axis of the firearm 10 are provided, of course, any other locations are also contemplated). The powering rails 18 are attached, in one embodiment, to rail 12.

Each of the powering rails 18 are configured to transmit power to an associated accessory 14 via conductive couplings. The same or different couplings may also allow for the transmission of data though the rails 18 to/from the accessories. The couplings can be any type of coupling including, for example, inductive couplings and/or galvanic couplings including direct contact between two conductive materials. In one embodiment, one of data or power is transmitted via inductive couplings and the other of data or power is transmitted via galvanic couplings. More detailed description of the powering rails 18 and the manner in which power/data may be transferred is described in one or more the patents/patent applications mentioned above.

Each of the rails 18 are also configured to communicate with a rail master control unit or processor 42 via a data bus, which in turn allows all of the accessories 14 to communicate information to other processors in the firearm. For example, the firearm 10 may further include a processor 51 disposed in the grip 212 (FIG. 1) of the firearm. As discussed more fully below, the processor 51 may serve as the master control unit. In one embodiment, the processor 42 may be omitted.

To the extent that the processor 42 is included, it may be referred to as a bus processor herein and it controls access to the data bus formed by the powering rails to allow for the processor 51 to communicate information to and from the accessories 14. The bus processor 42 may be located in either the upper or lower receiver of the firearm 10 or may be disposed in/on rails 12 or power rails 18.

As illustrated, processor 51 is coupled via communication link 133 to a communication device 132 that may be worn, for example, in backpack or vest. This allows for the processor 51 to communicate with other devices 136/200 in the system as more fully described below. The communication link 133 may be wired or wireless or a combination thereof. The communication device 132 may communicate in any known manner including, but not limited to, rf communications, cellular communications, Bluetooth, and ZigBee and the communication path is generally shown as passing through a communication network 131. The communication network 131 can be any type of now known or later created network and may include one or more additional processors for routing or storing the information.

In an embodiment, the PDA 140 is also able to provide information to and receive information from the communication network 131. For instance, accessories 14 in the form of sensors may provide information to the processor (42 or 51 or both) and receive information back from the processor and transmit it off the rifle 10 to the communication network 131. In one embodiment, the communication from the PDA 140 is direct to the communication network 131 via path 141 and in another embodiment, the PDA 140 communicates with the communication device 132 (path 142) which in turn provides communication to the communication network 131. It shall be further understood that any of the processors 51/42 or the PDA 140 may operate as a server in communication with each other or external server. For instance, the PDA 140 may operate as a server that connects the processors 42/51 to a battle management system. As a server, the PDA 140 may also be able to process map or coordinate date received from an external source such as a battle management system. The same may be true of the tablet 200 discussed below. In addition, while the sensors/accessories 14 are shown as connected to rails, it shall be understood these elements can be integral or embedded in the upper receiver (or any other portion) of a firearm.

In one non-limiting embodiment the observer system is a spotter scope 136 that may be able to determine the location of a potential target. This may include determining the location of the scope 136 and the distance/direction to the target for instance, by combining a GPS location of the scope 136 with distance from a laser range finder and means for determining pointing direction as discussed below this information may then be transferred from the scope 136 to the firearm 10 and then routed through the rails and a location of the target displayed on a map shown on an accessory 14 such as a PDA 140. In this embodiment, firearm 10 of the system 130 is a sniper rifle, which is networked or communicates with scope 136 through the communication network 131. In one embodiment, the communication between the firearm and the scope 136 (or the tablet 200 discussed below) may be direct point-to-point contact. It shall be understood that one or more of the accessories 14 may also communicate directly to the communication network 131 in any known manner including, but not limited to, rf communications, cellular communications, Bluetooth, and ZigBee and these communication devices may be any one of accessories 14 or peripheral device 132 which may be worn by an operator of one of the components. In one embodiment, the communication network is a wireless LAN network. The communication devices also being networked or in communication with other devices coupled to the powered rail(s) 18. Although only two items (e.g., firearm 10 and scope 136) are illustrated it is understood that numerous items (e.g., more than two) may be networked to communicate with each other. For example, multiple firearms 10, scope 136 and numerous other devices or items may be networked through system 130 and data can be exchanged between any of the items through the communication network 131. Each item may target, identify, or exchange data (either unique to that item or common between items) with respect to multiple targets, locations, persons, or other items.

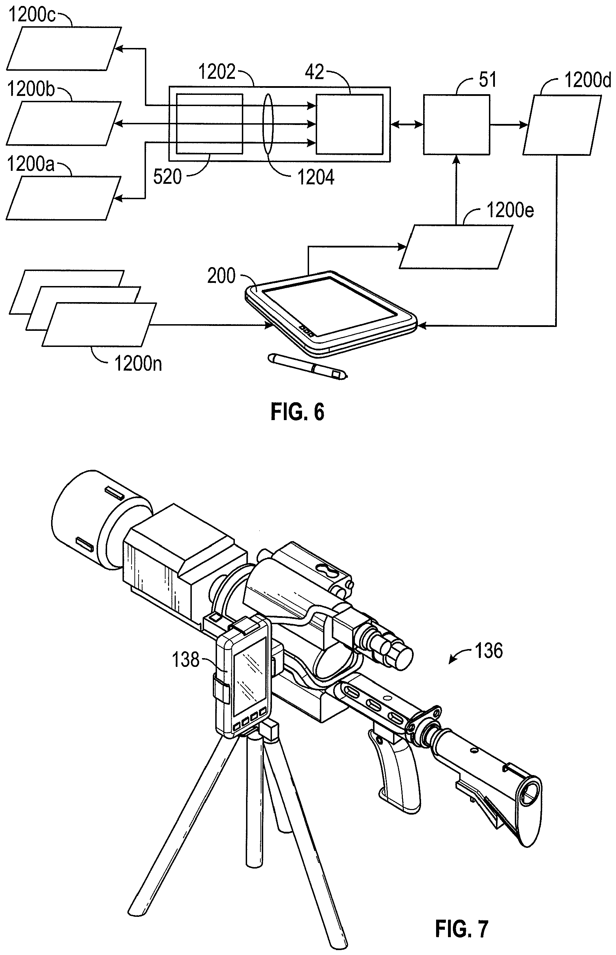

Another example of a scope 136 is illustrated as scope in FIG. 7. In this example, the scope 136 may have a device 138 that communicates with an associated accessory 14 or device 138/200 illustrated in at least FIG. 1. For example, devices 138 and 140 may be GPS, laser range finder, PDA or targeting devices capable of communicating (e.g., wireless or otherwise) with each other and thus exchanging data and information.

The system illustrated in FIG. 3 shows a version of the system 130 capable of communication with and/or part of a battlefield management system (BMS) illustrated as tablet computer 200. Of course, the BMS could be implanted on other types of devices. Further, it shall be understood that the PDA 140 could be part of the system. In general, a battlefield management system is a system that integrates information acquired from multiple inputs and can be used coordinate movement/actions of multiple actors (e.g., soldiers).

As illustrated, one of the accessories 14 is coupled to an adapter 205 that allows it to communicate with the rail 12. The adapter 205 could condition power into a form desired by the accessory. For example, the adapter 205 could be utilized to convert power into a form or particular pin layout used by a PDA 140 or scope 136. Further, the adapter could include formatting logic to convert PDA or scope data into a form conductive for transmission through the rail 18. For example, parallel data could be converted into serial format.

In an embodiment, the system 130 includes a sensor 220 capable of determining a bearing of firearm 10. Such a sensor may be a compass or part of a GPS device or other device. In one example, the angular (bearing, pitch and roll) information may be determined from sensors contained in PDA 140. In other examples, the angular sensors may be formed by one or more rotationally sensitive sensors such as inclinometers, rate gyros, accelerometers and magnometer mounted on the firearm 10. In one example the firearm 10 includes at least one set of angular sensors 222 to determine the inclination, roll and bearing with respect to the horizontal axis of the firearm 10. The processor 51 may combine the data from the sensors (e.g., 220, 222) as well as information from another accessory 14 on the firearm 10 and then cause it to be transmitted via communication device 132 to the battle management system 200 or any other scope 136. It shall be understood that any of the capabilities disclosed herein with respect to the rifle 10 may be applicable to the scope 136 or any other device included in system 130.

In one embodiment, the processor 51 collects data from the accessories 14 (herein, accessories will also include any sensor on the firearm) in either a polled or interrupt method via the data bus. The data bus can be either wired or wireless interfaces. The processor 51 may utilize a real time clock to routinely interrogate accessories 14 at a predetermined schedule. During these predetermined intervals the processor 51 reads the data and stores it into memory. In one embodiment, the data is tagged with a real time clock stamp to facilitate data processing. In one embodiment, one or more of the accessories 14 are interrupt driven. In such a case, an event causes the accessory 14 to send an interrupt to the processor 51 which, in turn, causes the processor 51 to collect data from the accessory 14.

Regardless of how collected, the data is transmitted from communication device 132 to the tablet 200, the scope 136 or both. Further, either of scope 136 or the tablet 200 can send information back to the firearm 10.

In operation, processor 51 draws power from the power supply 84 and may discover connected accessories 14. In one embodiment, the discovery may include verifying that the accessory 14 is operable. In the case that the accessory 14 is a sensor, the processor 51 may configure the sensor based on its location on the firearm and function. The sensors can be navigation, acoustic or optical devices. The sensors all communicate to the processor via the data bus and report sensor data and status. The navigation sensors could be individual or integrated into a single package, and are GPS (military or commercial), accelerometer, rate gyro, magnometer (compass) or gyro scope and may sense and report in all three axial planes (x, y & z). The acoustic sensor may provide an acoustic signature of the environment around the firearm as well as of the firearm itself. The optical sensor may capture the optical spectrum in front of the weapon. The optical spectrum could be the visual, infrared, thermal, Short Wave Length, Medium Wave Length and Long Wave Length, etc.

It shall be understood that the format of the data stored/transmitted by the processor 51 can be varied and adapted to meet any preferred receiving performance. Further, while there are several different accessories 14 disclosed above, it shall be understood that the processor 51 may include the ability to synthesize the data from these accessories before transmitting the data. For example, if a camera is used to form a digital image of a target, the time and the position and orientation of the rifle 10 can be attached to that image before it is transmitted. Further, in some cases, the rifle 10 may include a video camera attached as an accessory. In such a case, the data (e.g., images or video) could be streamed in real-time with time/position data appended thereto or sent in periodic or interrupt driven intervals.

In some cases, the processor 51 may include the ability to process the data collected from the accessories 14. For example, the processor 51 may include instructions that allow it to perform ballistics calculations, target range and angular offset calculation, and target tracking. Further, based on collected data, the number of shots taken, remaining ammunition, firearm performance and maintenance determinations and other firearm related calculations may be made. In one embodiment, the accessories 14/processor 51 monitor the internal ballistic life cycle and internal mechanisms of the firearm 10. As a firearm's mechanisms wear or become fouled, previously recorded events can be compared to determine the percentage of difference. Dependent on the parameter be monitored, such comparisons may determine the usefulness of the firearm.

Either in real time or at a prior time, map information related to an area in which the firearm 10 is, or in the future may be, located is provided to one or more of: microprocessor 42/51, PDA 140, and tablet 200. The map information may be in the form of an overhead aerial view in one embodiment and may be received from any source including, but not limited to reconnaissance information taken by satellite or other overhead device such as a drone. Of course, publicly available maps could be used in one embodiment. Based on a GPS location of the firearm 10, a portion of the map may be selected. Given the bearing of the firearm 10, a view of the map in the region in front of the firearm 10 may be selected and displayed on the PDA 140. Further, with the information the location of "friendlies" can be displayed on the maps as the tablet 200 includes information from all of the weapons in the system 130 and can place indicators on the map at those locations. Further, as an example, the location of a hostile party may be added to the map based, for example, the location of a friendly and a distance measured to the hostile by a laser range finder.

In one embodiment, the firearm 10 includes an inclinometer as one of the accessories 14. Assuming that ballistic information is known about a projectile (e.g., a bullet or grenade) that the firearm 10 (or an attachment thereto) fires, a projected impact point on the map be displayed.

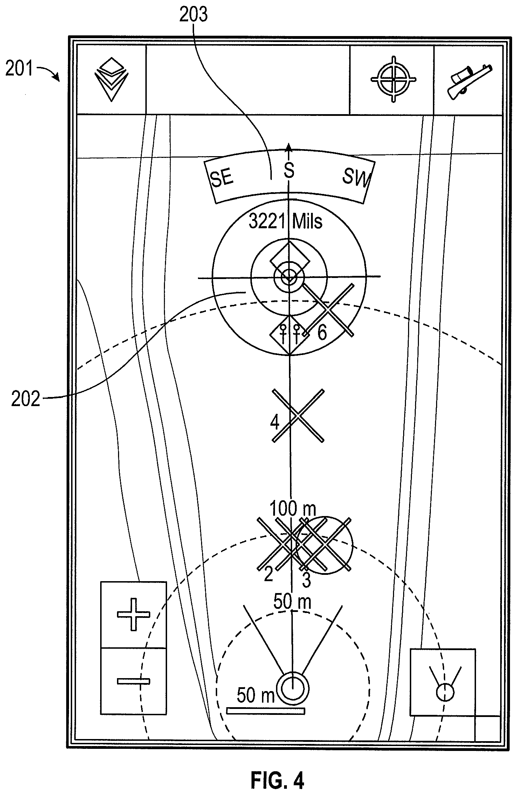

With reference to FIG. 4, an example of a display 201 of PDA 140 is illustrated. The bearing information (shown by compass 203) described above can be used to position a possible impact location 202 of the projectile in along the y axis. Similarly, information from an angular sensors and the ballistic information can be used to determine how far the projectile will travel and the, thus, determines the location of the impact location 202. As the firearm as raised upward, the impact location 202 translates up on the map 201.

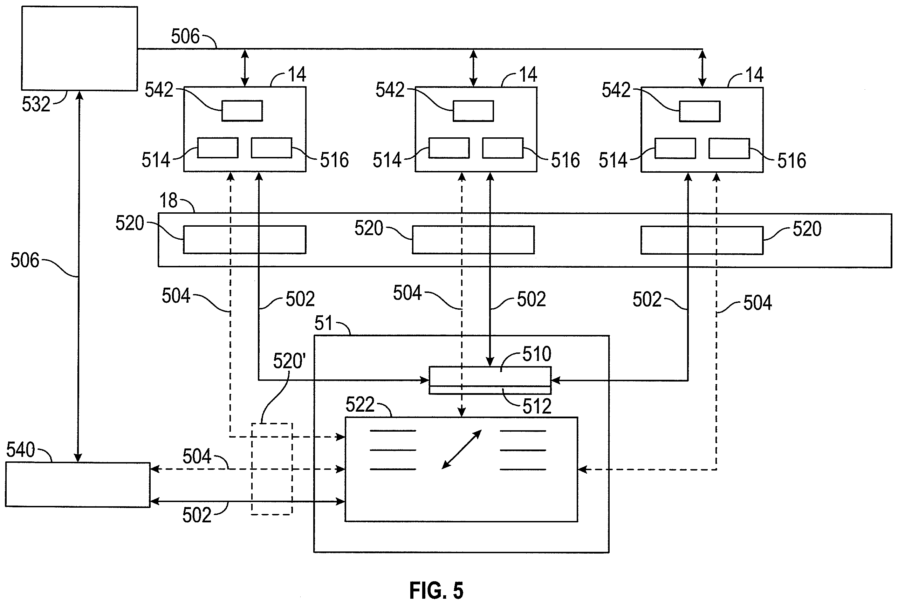

FIG.5 schematically illustrates communication between various components on a firearm 10 as disclosed herein. The firearm 10 includes at least one rail 18 onto which several accessories 14 are coupled. The system includes three different communication channels shown as a low speed channel 502, a medium speed channel 504 and a high speed channel 506. The low speed channel 502 extends from and allows communication between the master processor 76 and any of the accessories 14. The low speed channel 502 can be driven by a low speed transmitter/receiver 510 in processor 51 that includes selection logic 512 for selecting which of the accessories 14 to route the communication to.

Each accessory 14 includes low speed decoding/encoding logic 514 to receive and decode information received over the low speed channel 502. Of course, the low speed decoding/encoding logic 514 can also include the ability to transmit information from the accessories 14 as described above.

In one embodiment, the low speed channel 502 carries data at or about 100 kB/s. Of course, other speeds could be used. The low speed channel 502 passes through a coupling 520. The coupling 520 could be galvanic or via inductive coil pairs. In one embodiment, the inductive coil pair could be replaced include a two or more core portions about which the coil pair is wound. In another embodiment, the cores can be omitted and the inductive coil pair can be implemented as an air core transformer. As illustrated, the couplings 520 are contained within the powering rail 18. Of course, one or more of the portions of the coupling can be displaced from the rail 18.

The medium speed channel 504 is connected to couplings 520 and shares them with low speed channel 502. For clarity, branches of the medium speed channel 504 as illustrated in dashed lines. As one of ordinary skill will realize, data can be transferred on both the low speed channel 502 and the medium speed channel at the same time. The medium speed channel 504 is used to transmit data between the accessories 14.

Both the low and medium speed channels 502, 504 can also be used to transmit data to or receive data from an accessory (e.g. a tether) not physically attached to the rail 18 as illustrated by element 540. The connection between the processor 51 can be either direct or through an optional inductive coil pair 520'. In one embodiment, the optional inductive coil pair 520' couples power or data or both to processor 51 which may be located in or near a handle portion (e.g., pistol grip) of a firearm.

To allow for communication between accessories 14 over the medium speed channel 504, the processor 51 can include routing logic 522 that couples signals from one accessory to another based on information either received on the medium speed channel 504. Of course, in the case where two accessories coupled to the rail 18 are communicating via the medium speed channel 502, the signal can be boosted or otherwise powered to ensure is can drive couplings 520 between the accessories.

In another example, the accessory that is transmitting the data first utilizes the low speed channel 502 to cause the processor 51 sets the routing logic 522 to couple the medium speed channel 504 to the desired receiving accessory. Of course, the processor 51 itself (or an element coupled to it) can be used to separate low and medium speed communications from one another and provide them to either the low speed transmitter/receiver 510 or the routing logic 522, respectively. In one embodiment, the medium speed channel 504 carries data at 10 MB/s.

FIG. 5 also illustrates a high speed channel 506. In one embodiment, the high speed channel 506 is formed by an optical data line and runs along at least a portion of the length of the rail 18. For clarity, however, the high speed channel 506 is illustrated separated from the rail 18. Accessories 14 can include optical transmitter/receivers 542 for providing signals to and receiving signals from the high speed channel 506. In one embodiment, a high speed signal controller 532 is provided to control data flow along the high speed channel 506. It shall be understood that the high speed signal controller 532 can be located in any location and may be provided, for example, as part of the processor 51. In one embodiment, the high speed signal controller 532 is an optical signal controller such as, for example, an optical router.

FIG. 6 shows a dataflow of information as it may be transferred according to one embodiment. Accessory data 1200a, 1200b and 1200c is representative of data that may be transferred to or from accessories coupled to a rail system 1202 coupled to a firearm. The rail system 1202 may be formed as herein described. Of course other rail systems capable of supporting one or more accessories on a firearm may be utilized. The rail system 1202 may provide power to the accessories in one embodiment but that is not required. The rail system 18 may also provide a physical conduit for transmitting data to and from the accessories. As mentioned above and as more fully discussed below, the data 1200a-1200c passes through a coupling 520 that provides for inductive or galvanic transfer of the data from the accessory to the communication pathway (e.g., bus) 1204 provided by the rail system 1202. Of course, other energy transfer methods such as capacitive coupling may be utlilized. Processor 42 controls communication over the bus 1204 and as such may be referred to as a bus processor in one embodiment. The bus processor 42 may be located in the rail system 1202 itself or in the upper or lower receiver of a firearm. The bus processor may be able to determine, in one embodiment, when an accessory is coupled to the rail system 1202. It should be noted that another processor (e.g. processor 51) may perform the bus control functions in one embodiment and, in such and embodiment, the bus processor 42 may be omitted.

The bus processor can allow, for example, for first accessory data 1200a to be transferred to the processor 51 first, followed by data 1200b and then 1200c in one embodiment. Of course, any ordering a data can be provided for. The data reaches processor 51 and then transformed into an output data set 1200d. In one embodiment, the output data set is a compilation of portions of the data 1200a-c. Output data set 1200d could also include additional information such as a time stamp. For example, assume data 1200a is GPS data from a GPS device coupled to the rail system 1200, data 1200b is bearing information and data 1200c is a target distance value. This data could be combined and time stamped to provide an accurate time sensitive location of a potential target. Data 1200d may also include manipulated data as well. Regardless, data 1200d is provided to computing device 200 (e.g., a battle management system). Data 1200d may be transmitted off of the rifle 10 in any manner including through one of the accessories (e.g., PDA 140).

Computing device 200 may also receive data from other battlefield devices (e.g., other rail systems) as generally indicated by data 1200n. The computing device takes some or all of the data that it has received and may, in one embodiment create mission data 1200e. This data is then transferred to processor 51 and subsequently provided to one or more of the accessories. An example (following from above) includes mission data 1200e that includes a map showing all of the targets identified by any of the rifles and data 1200e could be sent to any or all of the rifles that are connected to a particular network. The format and content of the each of the different data elements shown in FIG. 6 may be platform agnostic in one embodiment so that the system 1202 may integrated into any preexisting or later developed battle management system.

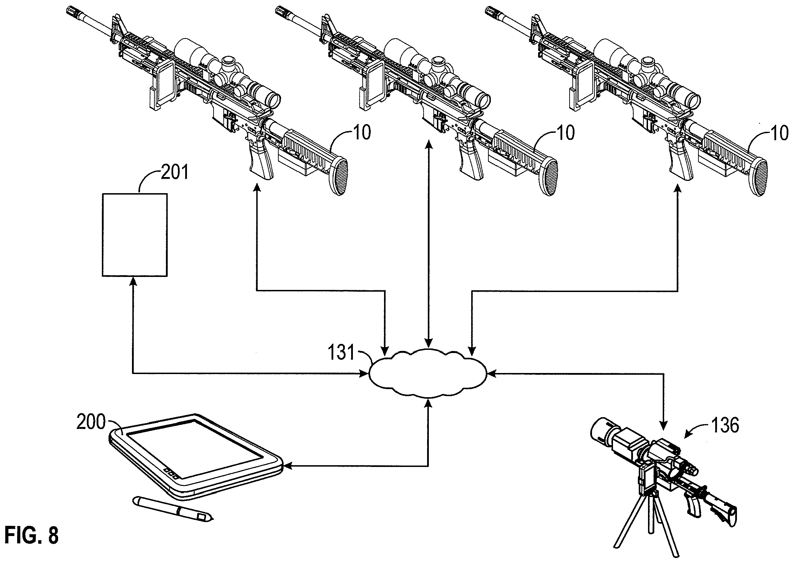

The skilled artisan will realize that any number of rifles 10, spotter scopes 136, tablets 200 and the like may communicate with one another as shown in FIG. 8, other battlefield devices may also be included an indicated by reference numeral 201. For instance, grenade launchers, mortar launchers or any other element used to determine information or launch a projectile could communicate through network 131.

As referred to above, the rails 18 can be used to deliver power and/or data to the accessories 14. The power and/or data can be transferred bidirectionally to and from the rail to the accessory inductively or via a direct electrical (galvanic) connection.

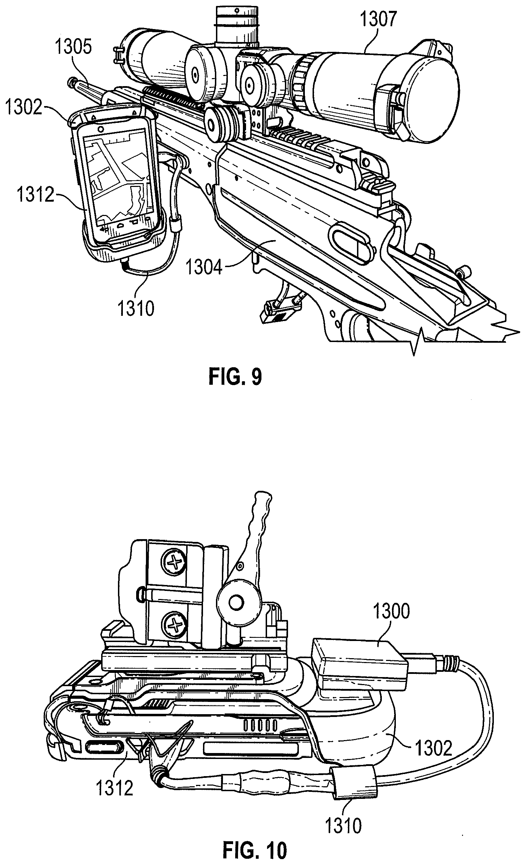

In the above description the sensors used to determine location, bearing or other information have been located such they are directly attached to the firearm (e.g., coupled to the rails) or are contained, for example in a PDA 140. With reference now to FIGs. 9-10, in another embodiment, a sensor pack 1300 is shown coupled directly to an accessory carrier 1302 that carriers accessory 1312. The accessory carrier 1302 may be coupled directly to a firearm 1304 or may be coupled to any of the rails described above. That is, in one embodiment, the firearm 1304 does not include rails to which the carrier 1302 is attached. Of course, rails for other elements could be included on the firearm. The fire arm 1304 may include barrel 1305 and optional optical device like a laser range finder or illustrated scope 1307.

Regardless, in operation, the accessory carrier 1302 is rigidly coupled to the firearm such that it moves is the same or similar manner to the firearm 1304 as it moves. That is, motion of the firearm 1304 may be estimated based on motion of the carrier 1302 to which the sensor pack 1300 is attached. Locating the sensors in a sensor pack 1300 rather than in the accessory 1312 is that they may be more able to withstand the violent recoil experience when the firearm 1304 is fired than if they were located in a PDA 140.

The sensor pack 1300 may include one or more of navigation, acoustic or optical devices. The navigation sensors could be individual or integrated into a single package, and are GPS (military or commercial), accelerometer, rate gyro, magnometer (compass) or gyro scope and may sense and report in all three axial planes (x, y & z). The acoustic sensor may provide an acoustic signature of the environment around the firearm as well as of the firearm itself. The optical sensor may capture the optical spectrum in front of the weapon. The optical spectrum could be the visual, infrared, thermal, Short Wave Length, Medium Wave Length and Long Wave Length, etc.

In an embodiment, the sensor pack 1302 is connected, either wirelessly or via cable 1310 as illustrated, to an accessory 1312 carried by the accessory carrier 1302. The accessory 1312 may be a PDA 140 in one embodiment. As described above, the accessory provides the information from the sensor pack 1302 to a communication network either directly, or through an intermediate device such as a processor carried in the rifle or by a soldier (or both). In one embodiment, the cable 1310 is a USB cable and provides for one or both of data and power transmission between the sensor pack 1302 and the accessory 1312. Of course, power (and data) could be transferred in other manners such as, for example, by capacitive or inductive coupling.

## Claims

1. A networked battle system comprising:
a communication network;
a first rifle (10);
a rail (12);
an accessory holding device coupled to the first rifle;
a display device disposed in the accessory holding device in operative communication with a sensor pack, the display device including a communication element;
a sensor pack directly attached to the accessory holding device that includes a first sensor for determining a bearing of the first rifle, an accelerometer and a rate gyroscope;
wherein the display device includes the communication element and receives the sensor information from the sensor pack and provides it to the communication network; and
a battle management system in communication with the first rifle through the communication network that receives the sensor information from the sensor pack updates a battle plan based on the sensor information to form an updated battle plan.

2. The networked battle system of claim 1, further comprising:
a battlefield device including a display device attached thereto;
wherein the battle management system provides the updated battle plan to the display device through the communication network.

3. The networked battle system of claim 1, wherein the updated battle plan is a map that includes an indication of a location of a target.

4. The networked battle system of claim 1, wherein the communication network is a wireless local area network (WLAN).

5. The networked battle system of claim 2, wherein the battlefield device includes a microprocessor that receives the updated battle plan and provides it to its display device.

6. The networked battle system of claim 2, wherein the microprocessor is located in a grip of the battlefield device.

7. The networked battle system of claim 5, wherein the communication element is in communication with a radio device in communication with the communication network.

8. The networked battle system of claim 7, wherein the radio device is wirelessly coupled to the communication element.

9. The networked battle system of claim 1, wherein the communication element is in communication with a radio device in communication with the communication network.

## Patentansprüche

1. Vernetztes Gefechtssystem, umfassend:
ein Kommunikationsnetzwerk;
ein erstes Gewehr (10);
eine Schiene (12);
eine Zubehörhaltevorrichtung, die an das erste Gewehr gekoppelt ist;
eine Anzeigevorrichtung, die in der Zubehörhaltevorrichtung in betrieblicher Kommunikation mit einem Sensorpack angeordnet ist, wobei die Anzeigevorrichtung ein Kommunikationselement beinhaltet;
einen Sensorpack, der direkt an der Zubehörhaltevorrichtung angebracht ist, der einen ersten Sensor zum Bestimmen eines Lagers des ersten Gewehrs, einen Beschleunigungsmesser und ein Ratengyroskop beinhaltet;
wobei die Anzeigevorrichtung das Kommunikationselement beinhaltet, und die Sensorinformation von dem Sensorpack empfängt und diese dem Kommunikationsnetzwerk bereitstellt; und
ein Gefechtsverwaltungssystem, das über das Kommunikationsnetzwerk in Kommunikation mit dem ersten Gewehr ist, das die Sensorinformation von dem Sensorpack empfängt, einen Gefechtsplan basierend auf der Sensorinformation aktualisiert, um einen aktualisierten Gefechtsplan zu bilden.

2. Vernetztes Gefechtssystem nach Anspruch 1, umfassend:
eine Gefechtsfeldvorrichtung, die eine Anzeigevorrichtung, die daran angebracht ist, beinhaltet;
wobei das Gefechtsverwaltungssystem der Anzeigevorrichtung den aktualisierten Gefechtsplan über das Kommunikationsnetzwerk bereitstellt.

3. Vernetztes Gefechtssystem nach Anspruch 1, wobei der aktualisierte Gefechtsplan eine Karte ist, die einen Hinweis auf eine Stelle eines Ziels beinhaltet.

4. Vernetztes Gefechtssystem nach Anspruch 1, wobei das Kommunikationsnetzwerk ein drahtloses Local-Area-Netzwerk (WLAN) ist.

5. Vernetztes Gefechtssystem nach Anspruch 2, wobei die Gefechtsfeldvorrichtung einen Mikroprozessor beinhaltet, der den aktualisierten Gefechtsplan empfängt und diesen seiner Anzeigevorrichtung bereitstellt.

6. Vernetztes Gefechtssystem nach Anspruch 2, wobei sich der Mikroprozessor in einem Griff der Gefechtsfeldvorrichtung befindet.

7. Vernetztes Gefechtssystem nach Anspruch 5, wobei das Kommunikationselement in Kommunikation mit einer Funkvorrichtung in Kommunikation mit dem Kommunikationsnetzwerk ist.

8. Vernetztes Gefechtssystem nach Anspruch 7, wobei die Funkvorrichtung drahtlos an das Kommunikationselement gekoppelt ist.

9. Vernetztes Gefechtssystem nach Anspruch 1, wobei das Kommunikationselement in Kommunikation mit einer Funkvorrichtung in Kommunikation mit dem Kommunikationsnetzwerk ist.

## Revendications

1. Système de bataille en réseau comprenant :
un réseau de communication ;
un premier fusil (10) ;
un rail (12) ;
un dispositif de support d'accessoire couplé au premier fusil ;
un dispositif d'affichage disposé dans le dispositif de support d'accessoire en communication fonctionnelle avec un ensemble de capteurs, le dispositif d'affichage comportant un élément de communication ;
un ensemble de capteurs directement fixé au dispositif de support d'accessoire qui comporte un premier capteur pour déterminer un relèvement du premier fusil, un accéléromètre et un gyromètre ;
dans lequel le dispositif d'affichage comporte l'élément de communication et reçoit les informations de capteur provenant de l'ensemble de capteurs et les fournit au réseau de communication ; et
un système de gestion de bataille en communication avec le premier fusil par l'intermédiaire du réseau de communication qui reçoit les informations de capteur provenant de l'ensemble de capteurs, met à jour un plan de bataille sur la base des informations de capteur pour former un plan de bataille mis à jour.

2. Système de bataille en réseau de la revendication 1, comprenant en outre :
un dispositif de champ de bataille comportant un dispositif d'affichage fixé à celui-ci ;
dans lequel le système de gestion de bataille fournit le plan de bataille mis à jour au dispositif d'affichage par l'intermédiaire du réseau de communication.

3. Système de bataille en réseau de la revendication 1, dans lequel le plan de bataille mis à jour est une carte qui comporte une indication d'un emplacement d'une cible.

4. Système de bataille en réseau de la revendication 1, dans lequel le réseau de communication est un réseau local sans fil (WLAN).

5. Système de bataille en réseau de la revendication 2, dans lequel le dispositif de champ de bataille comporte un microprocesseur qui reçoit le plan de bataille mis à jour et le fournit à son dispositif d'affichage.

6. Système de bataille en réseau de la revendication 2, dans lequel le microprocesseur est situé dans une poignée du dispositif de champ de bataille.

7. Système de bataille en réseau de la revendication 5, dans lequel l'élément de communication est en communication avec un dispositif radio en communication avec le réseau de communication.

8. Système de bataille en réseau de la revendication 7, dans lequel le dispositif radio est couplé sans fil à l'élément de communication.

9. Système de bataille en réseau de la revendication 1, dans lequel l'élément de communication est en communication avec un dispositif radio en communication avec le réseau de communication.
